# EUROPEAN PATENT SPECIFICATION

(11) **EP 3 478 018 B1**
(45) Date of publication and mention of the grant of the patent: **04.08.2021**
(21) Application number: 17830303.8
(22) Date of filing: 05.06.2017
(51) Int. Cl.: H04W 72/12

(54) **METHOD AND DEVICE FOR TRANSMITTING UPLINK REFERENCE SIGNAL**
VERFAHREN UND VORRICHTUNG ZUR ÜBERTRAGUNG EINES UPLINK-REFERENZSIGNALS
PROCÉDÉ ET DISPOSITIF D'ÉMISSION DE SIGNAL DE RÉFÉRENCE DE LIAISON MONTANTE

(30) Priority: 22.07.2016 CN 201610585098
(43) Date of publication of application: 01.05.2019
(73) Proprietor: Huawei Technologies Co., Ltd., Longgang District Shenzhen, Guangdong 518129 (CN)
(72) Inventor: ZENG, Kun, Shenzhen Guangdong 518129 (CN); WANG, Guangjian, Shenzhen Guangdong 518129 (CN); LIU, Kunpeng, Shenzhen Guangdong 518129 (CN)
(74) Representative: Epping - Hermann - Fischer
(86) International application number: PCT/CN2017/087209
(87) International publication number: WO 2018/014666

(56) References cited:
- EP-A1- 2 849 519
- WO-A1-2013/035974
- CN-A- 103 782 532
- CN-A- 104 955 066
- CN-A- 104 955 066
- US-A1- 2013 039 233
- NTT DOCOMO: "Discussion on Multi-Antenna Transmission of Synchronization and Reference Signals", 3GPP DRAFT; R1-165180 NR_MIMO_SS_RS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Nanjing, China; 20160523 - 20160527 14 May 2016 (2016-05-14), XP051089823, Retrieved from the Internet: URL:http://www.3gpp.org/ftp/tsg_ran/WG1_RL 1/TSGR1_85/Docs/ [retrieved on 2016-05-14]
- NTT DOCOMO: 'Discussion on Multi-Antenna Transmission of Synchronization and Reference Signals' 3GPPTSG RAN WG1 MEETING #85 RL-165180 23 May 2016, XP051089823

## Description

### TECHNICAL FIELD

The present invention relates to the field of wireless technologies, and in particular, to an uplink reference signal transmission method and apparatus.

### BACKGROUND

In hybrid networking of a high frequency base station and a low frequency base station, also referred to as heterogeneous networking (HetNet) of the high frequency base station and the low frequency base station, the low frequency base station covers a relatively large area, and the high frequency base station provides hotspot coverage in the coverage of the low frequency base station, to improve a capacity of a hotspot region. In this networking mode, system overheads of control signaling transmission on a high-frequency directional link can be reduced by using a wide coverage capability of the low frequency base station, and therefore this networking mode is a key deployment scenario in future 5G.

In an existing LTE system, Softcell networking is a typical HetNet networking solution. In the Softcell networking, a micro/pico base station (micro/pico BS) reuses a cell ID of a macro base station (macro BS). In other words, the micro base station is transparent for a terminal (for example: User Equipment, UE). When accessing a network, the terminal knows only an ID of an entire HetNet cell or a macro base station ID, and does not need to know a micro base station that serves the terminal. In this networking solution, to implement synchronization between the terminal and the micro base station, the existing technical solution is as follows:
(1) The terminal completes a downlink synchronization process with the macro base station by detecting a primary/secondary synchronization signal (PSS/SSS) of a cell, to obtain a synchronization clock on a network side.
(2) The terminal completes an uplink physical random access process to obtain an uplink timing advance (TA) from the terminal to the macro base station.
(3) Downlink synchronization and an uplink timing advance between the terminal and each micro base station directly reuse a result between the terminal and the macro base station. In the LTE system, a minimum cyclic prefix (CP) length of a symbol is 4.69 µs. It is assumed that a coverage radius of the macro base station is 500 m, a coverage radius of the micro base station is 100 m, a maximum latency difference between the macro base station and the micro base station does not exceed 1.33 µs, and a maximum latency difference obtained when different terminals arrive at the micro base station does not exceed 0.33 µs. Therefore, impact caused by the latency difference can be eliminated by using a CP.

In this networking solution, to enable the network side to select a micro base station (for example: Transmission Point, TP) or micro base station set that serves the terminal, the existing technical solution is as follows:
(1) The macro base station or a network controller of a HetNet network allocates, to a target terminal, a sending resource carrying an uplink measurement reference signal and another signal.
(2) The terminal sends a specified uplink measurement reference signal by using the specified resource.
(3) The network side such as a micro base station adjacent to the terminal in the HetNet performs measurement based on the uplink measurement reference signal, for example, measures reference signal received power (RSRP), to determine the micro base station/micro base station set that serves the terminal.

However, the foregoing solutions are not applicable to a scenario in which a micro base station is a high frequency base station, because a length of a high frequency symbol is of a microsecond level, for example, 1.25 µs, and a CP length is usually 1/5 of a symbol length, namely, 0.25 µs. Based on previous latency difference estimation, this CP length is not enough to eliminate impact caused by the latency difference between the macro base station and the micro base station and the TA latency difference of different terminals.

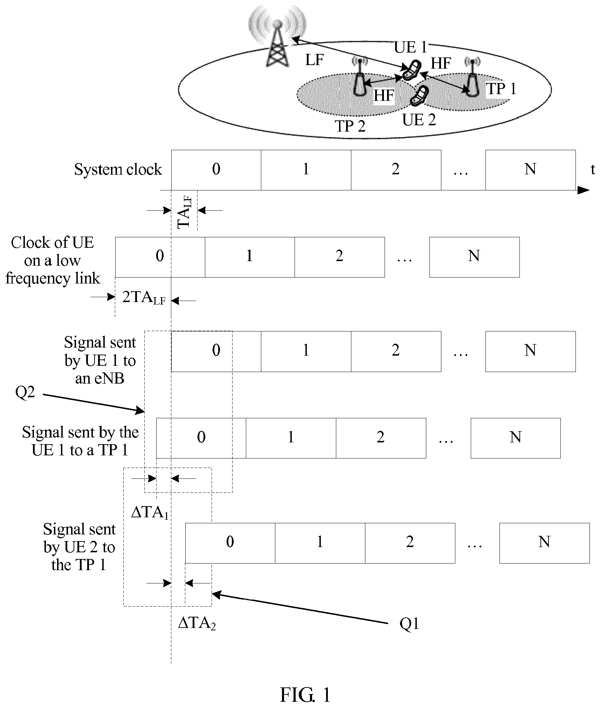

FIG. 1 describes the impact brought by the two types of latency differences:
Q1: Although time synchronization and uplink timing advance processes are completed between a terminal and a low frequency macro base station (an eNB in FIG. 1), in other words, a signal sent by a network side clock to the eNB and a signal sent by UE to the eNB in FIG. 1 are aligned in terms of time, when this result is reused on a micro base station, a random latency difference is caused when uplink transmission signals of different terminals (UE 1 and UE 2 in the figure) arrive at a micro base station (TP 1 in the figure). The latency difference damages time domain orthogonality of an uplink measurement reference signal and also interferes with a data part of the uplink measurement reference signal.
Q2: In addition, even for a single terminal (the UE 1 in the figure), when a result that the terminal is aligned with the macro base station in terms of time is reused on the micro base station (the TP 1 in the figure), a latency difference is caused between a low frequency macro base station and a high frequency micro base station because of different path propagation distances. This latency difference causes beam detection missing, and consequently a reference signal sent by using a specific beam cannot be completely received.

Therefore, in a HetNet hybrid networking scenario in which a micro base station is a high frequency base station and a macro base station is a low frequency base station, to resolve a prior-art problem that an uplink reference signal cannot be correctly transmitted because synchronization and a TA between a terminal and a low frequency macro base station cannot be reused between the terminal and a high frequency micro base station, how to design an uplink reference signal transmission solution to ensure uplink reference signal transmission accuracy is an urgent problem to be resolved.

NTT DOCOMO "Discussion on Multi-Antenna Transmission of Synchronization and Reference Signals" 3GPP TSG RAN WG1 Meeting #85, R1-165180 Nanjing, China 23rd - 27th May 2016 discloses a multi antenna transmission of synchronization/reference signals.

CN 104 955 066 A relates to a method for supporting measurement between base stations in a flexible time division duplex system. The method comprises: periodic candidate resources that may be occupied by a measurement reference signal between base stations are determined; for one base station, candidate resources for sending the measurement reference signal in the base station and/or candidate resources for detecting measurement reference signals from other base stations are determined based on a predetermined rule; and at least according to the situation that the base station needs to send and/or detect the measurement reference signal at a sub frame, a link direction of a symbol of the sub frame is determined.

### SUMMARY

Embodiments of the present invention provide an uplink reference signal transmission method and apparatus, to implement complete uplink reference signal transmission, and improve data transmission accuracy.

Specific technical solutions provided in the embodiments of the present invention are as follows: According to a first aspect, an embodiment of the present invention provides an uplink reference signal transmission method, including:
obtaining, by a terminal, a starting time of a time domain resource of an uplink reference signal of the terminal on a high frequency link, where there is a guard interval at at least one end of the uplink reference signal; and
   when the starting time of the time domain resource is reached, switching, by the terminal, transmit beams in different time slices in M time slices to transmit the uplink reference signal, where the uplink reference signal includes uplink reference signals transmitted in the M different time slices, M is a positive integer greater than 1, and the reference signals formed in the M time slices may be continuously transmitted in terms of time, or may be classified into a plurality of intervals for distributed transmission, wherein the determining, by a terminal, a starting time of a time domain resource of an uplink reference signal of the terminal on a high frequency link comprises:
   obtaining, by the terminal, a system clock of a low frequency base station based on a low frequency link, and determining a start point position, indicated by the system clock, of a timeslot of the low frequency link as the starting time of the time domain resource of the uplink reference signal of the terminal on the high frequency link; or
   obtaining, by the terminal, a system clock of a low frequency base station and an uplink timing advance of the terminal on a low frequency link based on the low frequency link, and determining, as the starting time of the time domain resource of the uplink reference signal of the terminal on the high frequency link, a position that is the uplink timing advance after a start point, indicated by the system clock, of a timeslot of the low frequency link; or
receiving, by the terminal, indication information of the starting time of the time domain resource that is sent by a network side.

In this design, after determining the starting time of the time domain resource of the uplink reference signal of the terminal on the high frequency link, the terminal switches, based on a transmission format of the uplink reference signal, the transmit beams on the different time slices in the M time slices corresponding to the uplink reference signal, to transmit the uplink reference signal. Such an uplink reference signal transmission method is applicable to a HetNet networking scenario of a high frequency micro base station and a low frequency macro base station or a hybrid networking scenario of high frequency base stations. Complete transmission of the uplink reference signal can be implemented, and therefore data transmission accuracy is ensured.

With reference to the first aspect, in a possible design, the guard interval is duration in which the terminal does not transmit a signal. Because terminals perform asynchronous transmission, the guard interval can prevent an uplink reference signal transmitted by a terminal from interfering with a signal transmitted by another terminal.

With reference to the first aspect, in a possible design, the uplink reference signal includes a synchronization reference signal and/or an uplink measurement reference signal, and the uplink measurement reference signal includes a sounding reference signal. The synchronization reference signal is used to implement uplink synchronization between the terminal and a high frequency base station, and the measurement reference signal is used to measure channel state information between the terminal and the high frequency base station.

With reference to the first aspect, in a possible design, a length of the guard interval is not less than a half of an uplink timing advance from the terminal to any high frequency base station. With reference to the first aspect, optionally, in a possible design, the transmitting, by the terminal, the uplink reference signal includes:
generating a radio frame, where the radio frame includes at least one network-oriented measurement timeslot interval, and the network-oriented measurement timeslot interval includes the guard interval and a symbol used for uplink reference signal transmission; and
sending the radio frame to transmit the uplink reference signal.

In this radio frame structure, the guard interval may be placed at either end or both ends of the symbol used for uplink reference signal transmission.

According to a second aspect, as an example useful for understanding the invention, an uplink reference signal transmission method is provided and includes:
determining, by a high frequency base station, N time slices that are used to receive an uplink reference signal transmitted by a terminal in a single time slice of the terminal, where N is a positive integer greater than 1; and
switching, by the high frequency base station, receive beams in different time slices in the N time slices to receive the uplink reference signal transmitted by the terminal in the single time slice of the terminal, where there is a guard interval at at least one end of the uplink reference signal.

In this way, the high frequency base station can completely receive the uplink reference signal sent by the terminal.

With reference to the second aspect, in a possible design, the method further includes:
after traversing all receive beams in the single time slice of the terminal, continuing, by the high frequency base station, to switch a receive beam in a switching sequence of the receive beams to receive the reference signal transmitted by the terminal in the single time slice of the terminal.

In this design, when the high frequency base station receives the uplink reference signal of the terminal, in addition to traversing the receive beams of the high frequency base station, the high frequency base station needs to perform switching at least one more time, continues to receive the uplink reference signal of the terminal, and can completely receive an uplink reference signal sent by using a specific transmit beam of the terminal, so as to overcome a beam detection missing problem.

According to a third aspect, an uplink reference signal transmission apparatus is provided and includes:
a determining unit, configured to determine a starting time of a time domain resource of an uplink reference signal of a terminal on a high frequency link, where there is a guard interval at at least one end of the uplink reference signal; and
a sending unit, configured to: when the starting time of the time domain resource is reached, switch transmit beams in different time slices in M time slices to transmit the uplink reference signal, where the uplink reference signal includes uplink reference signals transmitted in the M different time slices, and M is a positive integer greater than 1,
   wherein when determining the starting time of a time domain resource of the uplink reference signal of the terminal on the high frequency link, the processor is specifically configured to at least one of:
   the determining starting time of a time domain resource of an uplink reference signal of a terminal on a high frequency link comprises: obtaining a system clock of a low frequency base station based on a low frequency link, and determining a start point position, indicated by the system clock, of a timeslot of the low frequency link as the starting time of the time domain resource of the uplink reference signal of the terminal on the high frequency link;
   obtain a system clock of a low frequency base station and an uplink timing advance of the terminal on a low frequency link based on the low frequency link, and determine, as the starting time of the time domain resource of the uplink reference signal of the terminal on the high frequency link, a position that is the uplink timing advance after a start point, indicated by the system clock, of a timeslot of the low frequency link; or
   receive indication information of the starting time of the time domain resource that is sent by a network side.

With reference to the third aspect, in a possible design, the guard interval is duration in which the terminal does not transmit a signal.

With reference to the third aspect, in a possible design, the uplink reference signal includes a synchronization reference signal and/or an uplink measurement reference signal, and the uplink measurement reference signal includes a sounding reference signal.

With reference to the third aspect, in a possible design, a length of the guard interval is not less than a half of an uplink timing advance from the terminal to any high frequency base station.

With reference to the third aspect, in a possible design, when transmitting the uplink reference signal, the sending unit is specifically configured to:
generate a radio frame, where the radio frame includes at least one network-oriented measurement timeslot interval, and the network-oriented measurement timeslot interval includes the guard interval and a symbol used for uplink reference signal transmission; and
send the radio frame to transmit the uplink reference signal.

According to a fourth aspect, as an example useful for understanding the invention, an uplink reference signal transmission apparatus is provided and includes:
a determining unit, configured to determine N time slices that are used to receive an uplink reference signal transmitted by a terminal in a single time slice of the terminal, where N is a positive integer greater than 1; and
a receiving unit, configured to switch receive beams in different time slices in the N time slices to receive the uplink reference signal transmitted by the terminal in the single time slice of the terminal, where there is a guard interval at at least one end of the uplink reference signal.

With reference to the fourth aspect, in a possible design, the receiving unit is further configured to:
after traversing all receive beams in the single time slice of the terminal, continue to switch a receive beam in a switching sequence of the receive beams to receive the reference signal transmitted by the terminal in the single time slice of the terminal.

According to a fifth aspect, as an example useful for understanding the invention, a terminal device is provided, and the terminal device has a function of implementing behavior of the terminal in any one of the foregoing aspects and possible designs. The function may be implemented by hardware, or may be implemented by hardware by executing corresponding software. The hardware or software includes one or more modules corresponding to the foregoing function.

In a possible design, a structure of the terminal device includes a transceiver, a memory, and a processor. The memory is configured to store a group of programs, and the processor is configured to invoke the programs stored in the memory, to perform the method according to any one of the foregoing aspects and designs.

According to a sixth aspect, as an example useful for understanding the invention, a base station is provided, and the base station has a function of implementing behavior of the high frequency base station in any one of the foregoing aspects and possible designs. The function may be implemented by hardware, or may be implemented by hardware by executing corresponding software. The hardware or software includes one or more modules corresponding to the foregoing function.

In a possible design, a structure of the base station includes a transceiver, a memory, and a processor. The memory is configured to store a group of programs, and the processor is configured to invoke the programs stored in the memory, to perform the method according to any one of the foregoing aspects and designs.

The uplink reference signal transmission solution provided in the present invention can implement complete transmission of uplink reference signals in different networking scenarios, for example, a HetNet networking scenario of a high frequency micro base station and a low frequency macro base station or a hybrid networking scenario of a plurality of high frequency micro base stations or high frequency macro base stations, so as to improve data transmission accuracy between a terminal and a high frequency base station.

### BRIEF DESCRIPTION OF DRAWINGS

FIG. 1 is a schematic diagram of impact caused by a latency difference between macro and micro base stations in a HetNet scenario;
FIG. 2 is a schematic diagram of an application scenario according to the present invention;
FIG. 3 is a flowchart of an uplink reference signal transmission method according to an embodiment of the present invention;
FIG. 4 is a schematic diagram of a guard interval placement position according to an embodiment of the present invention;
FIG. 5 is a schematic diagram of uplink reference signal transmission between a terminal and a high frequency micro base station according to an embodiment of the present invention;
FIG. 6A, FIG. 6B, and FIG. 6C are schematic diagrams of orthogonal processing performed by a terminal on an uplink reference signal according to an embodiment of the present invention;
FIG. 7 is a schematic diagram of another application scenario according to the present invention;
FIG. 8 is a schematic diagram of a frame structure applied to a communications system of hybrid networking of a high frequency micro base station and a low frequency macro base station according to Embodiment 1 of the present invention;
FIG. 9A is a schematic diagram of placing an uplink reference signal on a time domain resource according to Embodiment 2 of the present invention;
FIG. 9B is a schematic diagram of a frame structure applied to a communications system of hybrid networking of a high frequency micro base station and a low frequency macro base station according to Embodiment 2 of the present invention;
FIG. 10 is a schematic flowchart of an uplink synchronization reference signal transmission method according to Embodiment 3 of the present invention;
FIG. 11 is a schematic flowchart of an uplink measurement reference signal transmission method according to Embodiment 4 of the present invention;
FIG. 12 is a schematic flowchart of an uplink synchronization reference signal transmission method according to Embodiment 5 of the present invention;
FIG. 13 is a schematic flowchart of an uplink measurement reference signal transmission method according to Embodiment 6 of the present invention;
FIG. 14 is a structural diagram of an uplink reference signal transmission apparatus according to an embodiment of the present invention;
FIG. 15 is a structural diagram of a terminal device according to an embodiment of the present invention;
FIG. 16 is a structural diagram of an uplink reference signal transmission apparatus according to an embodiment of the present invention; and
FIG. 17 is a structural diagram of a network side device according to an embodiment of the present invention.

### DESCRIPTION OF EMBODIMENTS

The following clearly describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

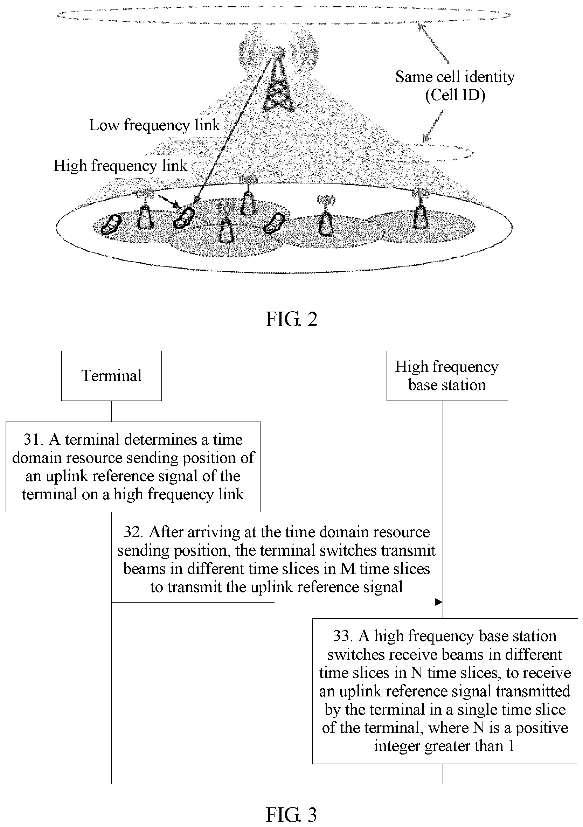

As shown in FIG. 2, FIG. 2 is a schematic diagram of an application scenario according to an embodiment of the present invention. The application scenario specifically includes a terminal, a low frequency macro base station, and at least one high frequency micro base station. Optionally, there may be a low frequency micro base station in this scenario. The high frequency micro base station relies on the low frequency macro base station to implement some transmission functions. The terminal is equipped with both a low frequency transceiver and a high frequency transceiver. The low frequency transceiver performs data communication with the low frequency macro base station by using a low frequency link, and the high frequency transceiver performs data communication with the high frequency micro base station by using a high frequency link.

Based on the schematic diagram of the application scenario shown in FIG. 2, an embodiment of the present invention provides an uplink reference signal transmission method. As shown in FIG. 3, a specific procedure includes the following steps.

Step 31: A terminal determines a starting time of a time domain resource of an uplink reference signal of the terminal on a high frequency link, where there is a guard interval at at least one end of the uplink reference signal.

The high frequency link is a communication link between the terminal and a high frequency base station, and the high frequency link is used for high frequency band transmission. Usually, a frequency band greater than 6 GHz is referred to as a high frequency band. Certainly, the high frequency band may alternatively be specifically set based on a specific networking environment of the terminal.

Specifically, the terminal may determine the starting time of the time domain resource of the uplink reference signal of the terminal on the high frequency link in the following three manners: Manner 1: The terminal obtains a system clock of a low frequency base station based on a low frequency link, and determines a start point position, indicated by the system clock, of a timeslot of the low frequency link as the starting time of the time domain resource of the uplink reference signal of the terminal on the high frequency link.

Manner 2: The terminal obtains a system clock of a low frequency base station and an uplink timing advance of the terminal on a low frequency link based on the low frequency link, and determines, as the starting time of the time domain resource of the uplink reference signal of the terminal on the high frequency link, a position that is the uplink timing advance after a start point, indicated by the system clock, of a timeslot of the low frequency link.

Manner 3: The terminal receives indication information of the starting time of the time domain resource that is sent by a network side.

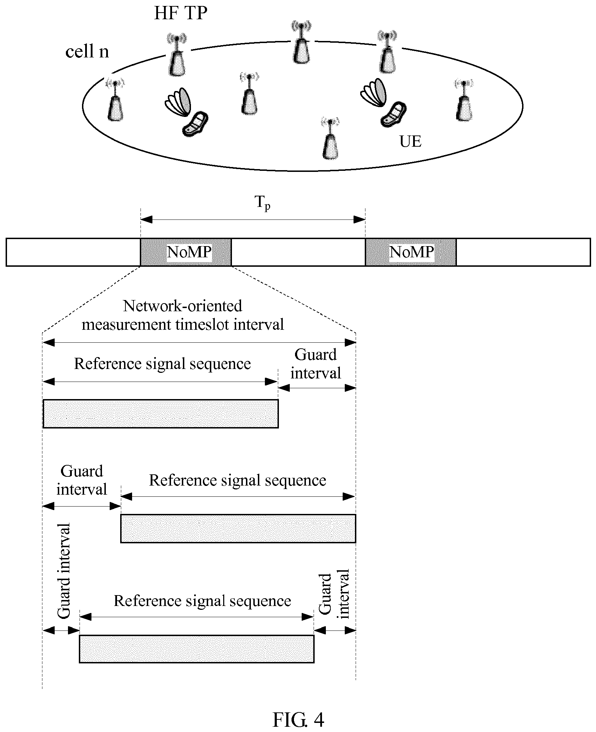

The uplink reference signal is periodically and intensively transmitted in a network-oriented measurement timeslot (NoMT) interval. Optionally, the NoMT is placed in a radio frame. Specifically, one radio frame may include one or more NoMTs, or one radio frame every a plurality of radio frames includes the NoMT. The NoMT includes an uplink reference signal and a guard interval, and the uplink reference signal and the guard interval are specifically placed in three manners. As shown in FIG. 4, the guard interval may be placed at either end of the reference signal, or may be placed at both ends of the reference signal, and the terminal does not transmit any signal within a time period of the guard interval.

It should be noted that a length of the guard interval is determined based on a specific deployment scenario of a macro base station and a micro base station in a HetNet network. The length of the guard interval is not less than 1/2 of an uplink TA from the terminal to any high frequency micro base station. In other words, L ≥ max|TAᵢ/2|, where L is the length of the guard interval, and TAᵢ is the uplink TA from the terminal to any high frequency micro base station. The uplink TA from the terminal to any high frequency micro base station is obtained through estimation by using an uplink TA from the terminal to a low frequency macro base station, position information of the high frequency micro base station, and position information of the low frequency macro base station. Alternatively, the guard interval and the length of the guard interval may be not specified. That there is the guard interval at the at least one end of the reference signal can be implicitly determined by using an NoMT interval length and a reference signal length, so as to determine the length of the guard interval.

The uplink reference signal includes a synchronization reference signal and/or an uplink measurement reference signal. The synchronization reference signal is used to implement uplink synchronization between the terminal and the high frequency base station, and the uplink measurement reference signal is used to measure channel state information between the terminal and the high frequency base station, for example, detecting signal strength at a receive end. The uplink measurement reference signal includes a sounding reference signal (SRS) sent by the terminal. The high frequency base station may implement uplink channel estimation by measuring the SRS, and allocate uplink resources based on the estimation. It can be learned that the SRS is extremely important for uplink channel estimation to dynamically allocate uplink resources. In addition, the SRS may also be used for operations such as uplink timing of the terminal and reciprocity-assisted downlink beamforming, and is also extremely important for these operations.

Step 32: When the starting time of the time domain resource is reached, the terminal switches transmit beams in different time slices in M time slices to transmit the uplink reference signal, where the uplink reference signal includes uplink reference signals transmitted in the M different time slices, and M is a positive integer greater than 1.

A corresponding time length for transmitting the uplink reference signal is divided into M time slices, and lengths of the time slices are the same, and may be one symbol, or may be a plurality of (≥2) symbols. A quantity of time slices corresponding to the uplink reference signal may be specified in advance, or may be specifically determined based on a quantity of transmit beams of the terminal. The quantity of transmit beams of the terminal is not less than the quantity M of time slices corresponding to the uplink reference signal.

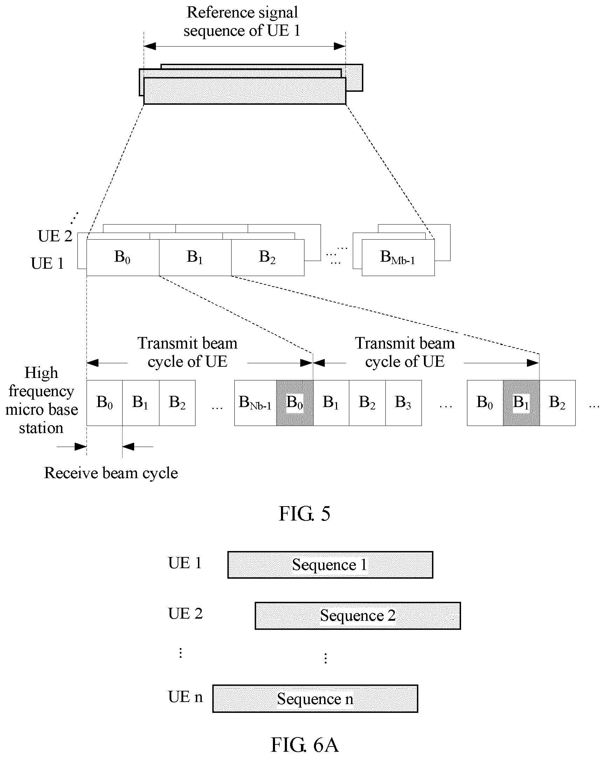

FIG. 5 is a schematic diagram of uplink reference signal transmission between a terminal and a high frequency micro base station. On a terminal side, the terminal sends an uplink reference signal in each time slice by using a different transmit beam. For example, the terminal sends a reference signal in a time slice Bo by using a transmit beam #0, and sends a reference signal in a time slice Bi by using a transmit beam #1. Specifically, the terminal may send the uplink reference signal in the following two manners:
A first manner is a centralized sending manner. In this case, the quantity M of time slices corresponding to the uplink reference signal of the terminal is not less than a minimum quantity of transmit beams required by the terminal to transmit the uplink reference signal in a specific directional area. For example, if the terminal needs to cover an area from 0° to 60°, and a beam width is 10°, at least six transmit beams are required, and a value of M needs to be greater than or equal to 6.

A second manner is a distributed sending manner. In this case, the quantity M of time slices corresponding to the uplink reference signal of the terminal is less than a minimum quantity of transmit beams required by the terminal to transmit the uplink reference signal in a specific directional area, but the minimum quantity of transmit beams required by the terminal to transmit the uplink reference signal in the specific directional area may be reached by using a plurality of reference signals.

In addition, the terminal needs to select a different transmit beam in each time slice to send at least one uplink reference signal in a synchronization reference signal and a measurement reference signal, and optionally, further needs to send an identity of the terminal.

Step 33: A high frequency base station switches receive beams in different time slices in N time slices, to receive an uplink reference signal transmitted by the terminal in a single time slice of the terminal, where N is a positive integer greater than 1.

As shown in FIG. 5, on a high frequency micro base station side, in duration of the single time slice of the terminal, the high frequency micro base station further divides the single time slice into N tiny time slices, and receives, in these tiny time slices by using different directional receive beams, the uplink reference signal sent by the terminal.

A length of the tiny time slice described above may be one symbol, or may be a plurality of (≥2) symbols.

It should be noted that, if a total quantity of receive beams of the high frequency micro base station is N_{b}, in the duration of the single time slice of the terminal, the high frequency micro base station needs to divide the single time slice into (N_{b}+n) tiny time slices, where Nb+n=N, and cyclically receives, in the (N_{b}+n) tiny time slices by using the receive beams, the uplink reference signal sent by the terminal. Herein, a value of n is usually 1. As shown in FIG. 5, after the high frequency micro base station traverses the receive beams of the high frequency micro base station, and a beam used for one extra directional reception is a beam used in a start time slice. As shown in FIG. 5, a start receive beam is B₀, and a receive beam used for one extra reception is still B₀.

The value of n may alternatively be 2 or a positive integer greater than 2. A specific value is related to a maximum latency difference between high and low frequency base stations and transmission duration of a single reference signal. For example, if the maximum lateny difference between high and low frequency base stations is 1.33 µs, and the transmission duration of a single reference signal is one symbol period whose length is 0.64 µs, n=[Maximum latency difference between high and low frequency base stations/Transmission duration of a single reference signal]=3.

After traversing all receive beams in the single time slice of the terminal, the high frequency base station continues to switch a receive beam in a switching sequence of the receive beams to receive the reference signal transmitted by the terminal in the single time slice of the terminal. The uplink reference signal at the NoMT interval is divided into time slices on the terminal side. Each time slice includes symbols, and a reference signal used for synchronization or measurement is carried by these symbols. The following orthogonal design manners may be used for resource allocation methods for uplink reference signals of different terminals.

Manner 1: Code division orthogonal manner. As shown in FIG. 6A, uplink reference signals of different terminals are encoded by using different orthogonal sequences with fine cross-correlation features, so that a receive end can separate a target reference signal from time-frequency hybrid signals.

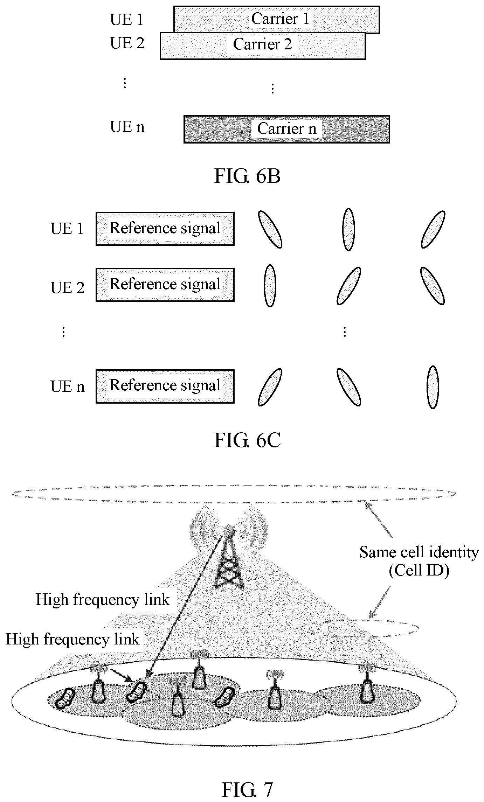

Manner 2: Frequency division orthogonal manner. As shown in FIG. 6B, for a multicarrier system, uplink reference signals of different terminals may be carried by different subcarriers of a symbol, so that interference caused by time domain misalignment is avoided through frequency division.

Manner 3: Wavelength division orthogonal manner. As shown in FIG. 6C, because the high frequency micro base station uses a directional beam, different terminals may send respective reference signals at a same moment by using beams corresponding to different directional beams, and this method is also referred to as beam spatial multiplexing.

Manner 4: Combination of any two or three of the foregoing three manners. When there are a relatively large quantity of terminals, any two or three of the foregoing three manners may be combined. For example, the terminals are classified into groups, one orthogonal multiplexing manner is used between groups, and another orthogonal multiplexing manner is used within a group.

It should be noted that the uplink reference signal transmission method shown in FIG. 3 is also applicable to a hybrid networking application scenario of a plurality of high frequency base stations shown in FIG. 7. The application scenario specifically includes a terminal and a plurality of high frequency micro base stations. In the hybrid networking scenario of a plurality of high frequency base stations, the high frequency base station may be a high frequency micro base station, or may be a high frequency macro base station.

### Embodiment 1

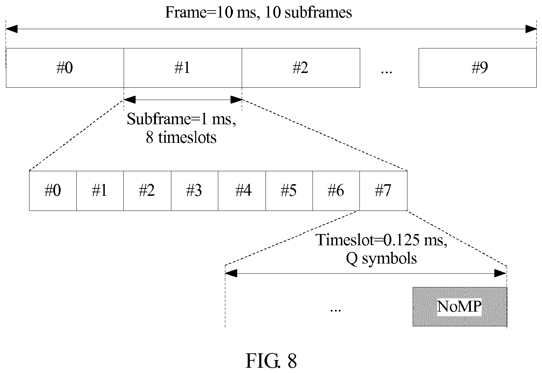

As shown in FIG. 8, Embodiment 1 provides a frame structure applied to a communications system of hybrid networking of a high frequency micro base station and a low frequency macro base station shown in FIG. 2 or hybrid networking of a plurality of high frequency base stations shown in FIG. 7. In a hybrid networking scenario of a plurality of high frequency base stations, the high frequency base station may be a high frequency micro base station, or may be a high frequency macro base station.

In FIG. 8, a frame length of one radio frame is 10 milliseconds. The radio frame includes 10 radio subframes with a frame length of 1 millisecond, and one radio subframe is further divided into eight timeslots with a length of 0.125 millisecond. Each timeslot includes Q symbols, and the symbol may be a single carrier symbol, or may be a multicarrier symbol such as an OFDM symbol. A typical value of Q may be set to 7n, where n is a positive integer. These timeslots are further classified into uplink timeslots and downlink timeslots.

An NoMT in the present invention is placed in an uplink timeslot of a subframe, and may be placed at a header of the uplink timeslot or at a tail of the uplink timeslot. For example, in FIG. 8, the NoMT is placed at a tail of an eighth timeslot (the timeslot is an uplink timeslot) of a second subframe.

### Embodiment 2

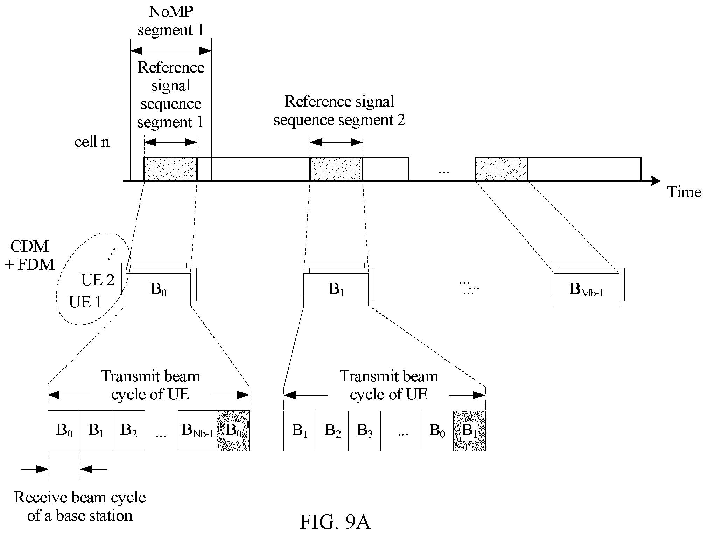

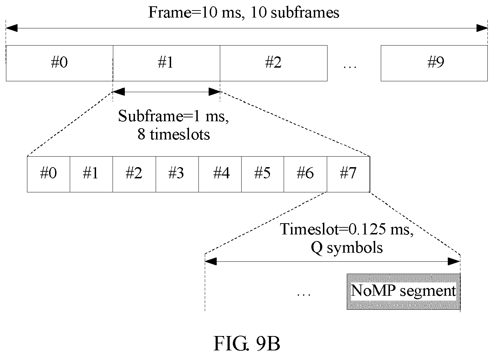

As shown in FIG. 9A and FIG. 9B, Embodiment 2 provides another frame structure applied to a communications system of hybrid networking of a high frequency micro base station and a low frequency macro base station shown in FIG. 2 or hybrid networking of a plurality of high frequency base stations shown in FIG. 7. In a hybrid networking scenario of a plurality of high frequency base stations, the high frequency base station may be a high frequency micro base station, or may be a high frequency macro base station.

As shown in FIG. 9A, different from Embodiment 1, because uplink reference signals are not contiguous on time domain resources, NoMT intervals used for transmitting the uplink reference signals are also in a distributed manner, and the NoMT intervals are divided into NoMT segments.

In FIG. 9B, a frame length of one radio frame is 10 milliseconds. The radio frame includes 10 radio subframes with a frame length of 1 millisecond, and one radio subframe is further divided into eight timeslots with a length of 0.125 millisecond. Each timeslot includes Q symbols, and the symbol may be a single carrier symbol, or may be a multicarrier symbol such as an OFDM symbol. A typical value of Q may be set to 7n, where n is a positive integer. These timeslots are further classified into uplink timeslots and downlink timeslots.

The NoMT segment in the present invention is placed in an uplink timeslot of a subframe, and may be placed at a header of the uplink timeslot or at a tail of the uplink timeslot. For example, in FIG. 9B, the NoMT segment is placed at a tail of an eighth timeslot (the timeslot is an uplink timeslot) of a second subframe.

### Embodiment 3

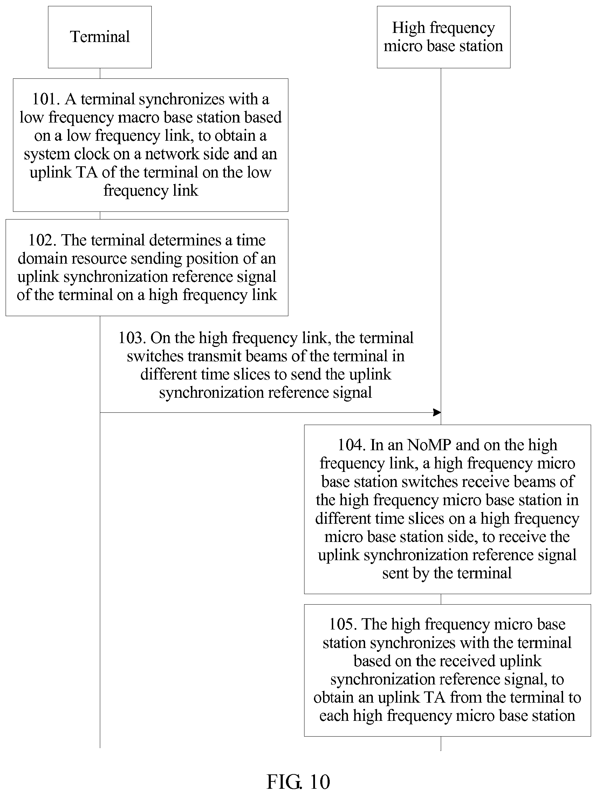

Based on the frame structures provided in Embodiment 1 and Embodiment 2, Embodiment 3 provides an uplink synchronization reference signal transmission method, and the method is applied to a network deployment scenario shown in FIG. 2. As shown in FIG. 10, specific steps are as follows.

Step 101: A terminal synchronizes with a low frequency macro base station based on a low frequency link, to obtain a system clock on a network side and an uplink TA of the terminal on the low frequency link.

Step 102: The terminal determines a starting time of the time domain resource of an uplink synchronization reference signal of the terminal on a high frequency link.

In a method for determining the starting time of the time domain resource, the system clock obtained on the low frequency link and/or an uplink TA value obtained by the terminal on the low frequency link may be used, and a start point of a specific timeslot of the low frequency link may be used as the starting time of the time domain resource of the uplink reference signal on the high frequency link, namely, a time domain position of a start point of an NoMT.

Step 103: Based on the frame structure provided in Embodiment 1 or Embodiment 2, on the high frequency link, the terminal switches transmit beams of the terminal in different time slices to send the uplink synchronization reference signal, and may also send an identity of the terminal.

Step 104: In an NoMT and on the high frequency link, each high frequency micro base station on the network side switches receive beams of the high frequency micro base station in different time slices on a high frequency micro base station side, to receive the uplink synchronization reference signal sent by the terminal, where a length of the time slice on the high frequency micro base station side is less than a length of a time slice on a terminal side. After the high frequency micro base station traverses the receive beams of the high frequency micro base station but there is still a remaining time slice, the high frequency micro base station continues to traverse the receive beams of the high frequency micro base station in an original beam switching sequence, to receive the uplink synchronization reference signal sent by the terminal. After the terminal switches a transmit beam, the high frequency micro base station continues to traverse the receive beams of the high frequency micro base station without changing the receive beam sequence, to detect and receive the uplink synchronization reference signal sent by the terminal.

Step 105: Each high frequency micro base station on the network side synchronizes with the terminal based on the received uplink synchronization reference signal, to obtain an uplink TA from the terminal to each high frequency micro base station.

### Embodiment 4

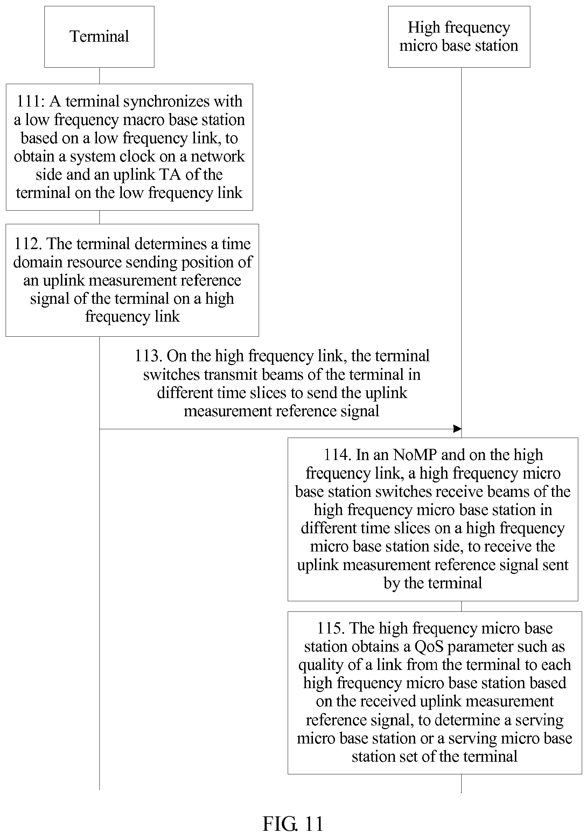

Based on the frame structures provided in Embodiment 1 and Embodiment 2, Embodiment 4 provides an uplink measurement reference signal transmission method, and the method is applied to a network deployment scenario shown in FIG. 2. As shown in FIG. 11, specific steps are as follows.

Step 111: A terminal synchronizes with a low frequency macro base station based on a low frequency link, to obtain a system clock on a network side and an uplink TA of the terminal on the low frequency link.

Step 112: The terminal determines a starting time of a time domain resource of an uplink measurement reference signal of the terminal on a high frequency link.

In a method for determining the starting time of the time domain resource, the system clock obtained on the low frequency link and/or an uplink TA value obtained by the terminal on the low frequency link may be used, and a start point of a specific timeslot of the low frequency link may be used as the starting time of the time domain resource of the uplink reference signal on the high frequency link, namely, a time domain position of a start point of an NoMT.

Step 113: Based on the frame structure provided in Embodiment 1 or Embodiment 2, on the high frequency link, the terminal switches transmit beams of the terminal in different time slices to send the uplink measurement reference signal, and may also send an identity of the terminal.

Step 114: In an NoMT and on the high frequency link, each high frequency micro base station on the network side switches receive beams of the high frequency micro base station in different time slices on a high frequency micro base station side, to receive the uplink measurement reference signal sent by the terminal, where a length of the time slice on the high frequency micro base station side is less than a length of a time slice on a terminal side. After the high frequency micro base station traverses the receive beams of the high frequency micro base station but there is still a remaining time slice, the high frequency micro base station continues to traverse the receive beams of the high frequency micro base station in an original beam switching sequence, to receive the uplink measurement reference signal sent by the terminal. After the terminal switches a transmit beam, the high frequency micro base station continues to traverse the receive beams of the high frequency micro base station without changing the receive beam sequence, to detect and receive the uplink measurement reference signal sent by the terminal.

Step 115: Each high frequency micro base station on the network side obtains a QoS parameter such as quality of a link from the terminal to each high frequency micro base station based on the received uplink measurement reference signal, to determine a serving micro base station or a serving micro base station set of the terminal.

It should be noted that main steps in Embodiment 4 are the same as those in Embodiment 3. A main difference is that a reference signal carried by an uplink signal of the terminal is a measurement reference signal instead of a synchronization reference signal. During final system design, the two types of reference signals may be combined. In other words, a group of reference signals are used for both synchronization and measurement.

### Embodiment 5

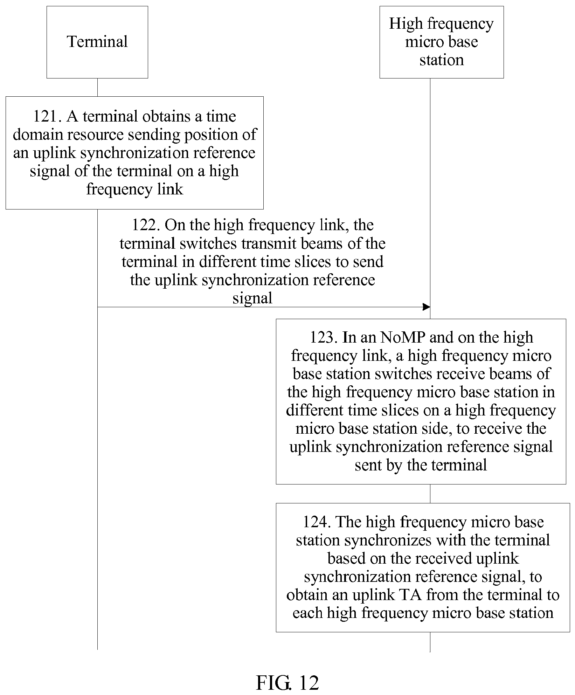

Based on the schematic diagram of the application scenario shown in FIG. 7, an embodiment of the present invention provides an uplink synchronization reference signal transmission method. As shown in FIG. 12, a specific procedure includes the following steps.

Step 121: A terminal obtains a starting time of a time domain resource of an uplink synchronization reference signal of the terminal on a high frequency link. Specifically, a method for obtaining the starting time of the time domain resource of the uplink synchronization reference signal may be: A neighboring high frequency micro base station notifies, through broadcasting, the terminal of a system clock used by the high frequency micro base station, and the terminal determines the starting time of the time domain resource of the uplink reference signal of the terminal on the high frequency link through calculation based on the system clock, namely, a time domain position of a start point of an NoMT.

Step 122: Based on the frame structure provided in Embodiment 1 or Embodiment 2, on the high frequency link, the terminal switches transmit beams of the terminal in different time slices to send the uplink synchronization reference signal, and may also send an identity of the terminal. Step 123: In an NoMT and on the high frequency link, each high frequency micro base station on a network side switches receive beams of the high frequency micro base station in different time slices on a high frequency micro base station side, to receive the uplink synchronization reference signal sent by the terminal.

A length of the time slice on the high frequency micro base station side is less than a length of a time slice on a terminal side. After the high frequency micro base station traverses the receive beams of the high frequency micro base station but there is still a remaining time slice, the high frequency micro base station continues to traverse the receive beams of the high frequency micro base station in an original beam switching sequence, to receive the uplink synchronization reference signal sent by the terminal. After the terminal switches a transmit beam, the high frequency micro base station continues to traverse the receive beams of the high frequency micro base station without changing the receive beam sequence, to detect and receive the uplink synchronization reference signal sent by the terminal.

Step 124: Each high frequency micro base station on the network side synchronizes with the terminal based on the received uplink synchronization reference signal, to obtain an uplink TA from the terminal to each high frequency micro base station.

### Embodiment 6

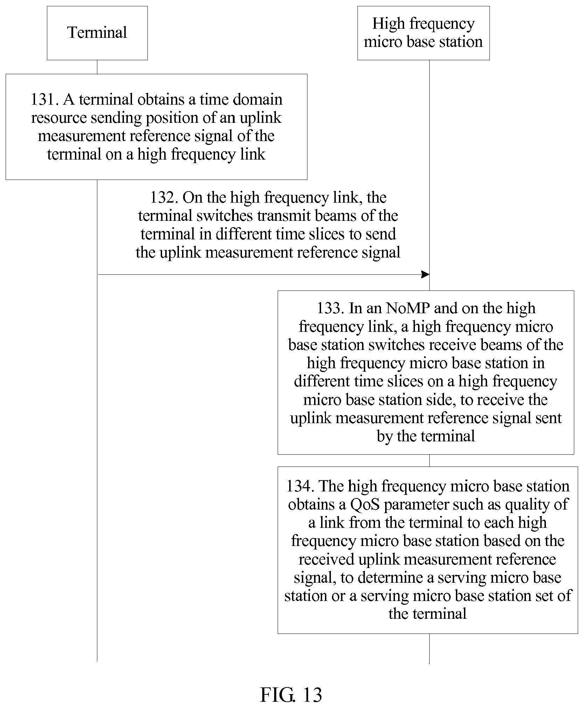

Based on the schematic diagram of the application scenario shown in FIG. 7, an embodiment of the present invention provides an uplink measurement reference signal transmission method. As shown in FIG. 13, a specific procedure includes the following steps.

Step 131: A terminal obtains a starting time of a time domain resource of an uplink measurement reference signal of the terminal on a high frequency link. Specifically, a method for obtaining the starting time of the time domain resource of the uplink measurement reference signal may be: A neighboring high frequency micro base station notifies, through broadcasting, the terminal of a system clock used by the high frequency micro base station, and the terminal determines the starting time of the time domain resource of the uplink reference signal of the terminal on the high frequency link through calculation based on the system clock, namely, a time domain position of a start point of an NoMT.

Step 132: Based on the frame structure provided in Embodiment 1 or Embodiment 2, on the high frequency link, the terminal switches transmit beams of the terminal in different time slices to send the uplink measurement reference signal, and may also send an identity of the terminal.

Step 133: In an NoMT and on the high frequency link, each high frequency micro base station on a network side switches receive beams of the high frequency micro base station in different time slices on a high frequency micro base station side, to receive the uplink measurement reference signal sent by the terminal.

A length of the time slice on the high frequency micro base station side is less than a length of a time slice on a terminal side. After the high frequency micro base station traverses the receive beams of the high frequency micro base station but there is still a remaining time slice, the high frequency micro base station continues to traverse the receive beams of the high frequency micro base station in an original beam switching sequence, to receive the uplink measurement reference signal sent by the terminal. After the terminal switches a transmit beam, the high frequency micro base station continues to traverse the receive beams of the high frequency micro base station without changing the receive beam sequence, to detect and receive the uplink synchronization reference signal sent by the terminal.

Step 134: Each high frequency micro base station on the network side obtains a QoS parameter such as quality of a link from the terminal to each high frequency micro base station based on the received uplink measurement reference signal, to determine a serving micro base station or a serving micro base station set of the terminal.

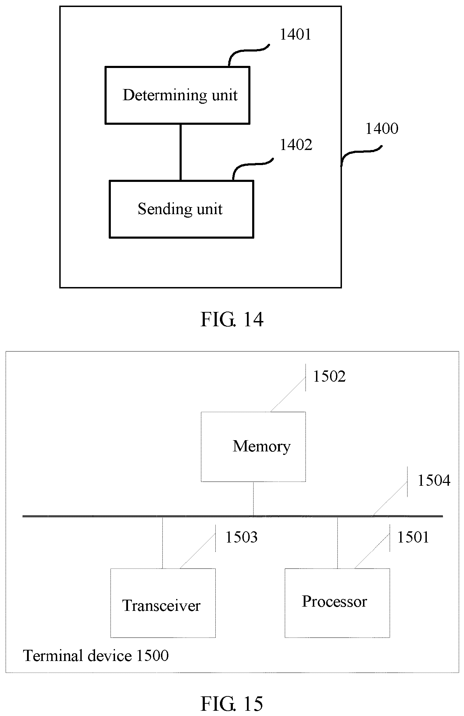

Based on the foregoing embodiments, as shown in FIG. 14, FIG. 14 is a schematic structural diagram of an uplink reference signal transmission apparatus 1400 according to an embodiment of the present invention. The apparatus 1400 is applied to a terminal in a HetNet scenario in which a high frequency base station is a micro base station and a low frequency base station is a macro base station or a terminal in a networking scenario of only high frequency base stations, and may be configured to perform an execution process of the terminal in the foregoing method embodiments. The apparatus 1400 includes a determining unit 1401 and a sending unit 1402.

The determining unit 1401 is configured to determine a starting time of a time domain resource of an uplink reference signal of a terminal on a high frequency link, where there is a guard interval at at least one end of the uplink reference signal.

The sending unit 1402 is configured to: when the starting time of the time domain resource is reached, switch transmit beams in different time slices in M time slices to transmit the uplink reference signal, where the uplink reference signal includes uplink reference signals transmitted in the M different time slices, and M is a positive integer greater than 1.

Optionally, the guard interval is duration in which the terminal does not transmit a signal.

Optionally, the uplink reference signal includes a synchronization reference signal and/or an uplink measurement reference signal, and the uplink measurement reference signal includes a sounding reference signal.

Optionally, a length of the guard interval is not less than a half of an uplink timing advance from the terminal to any high frequency base station.

Optionally, when determining the starting time of the time domain resource of the uplink reference signal of the terminal on the high frequency link, the determining unit 1401 is specifically configured to:
obtain a system clock of a low frequency base station based on a low frequency link, and determine a start point position, indicated by the system clock, of a timeslot of the low frequency link as the starting time of the time domain resource of the uplink reference signal of the terminal on the high frequency link; or
obtain a system clock of a low frequency base station and an uplink timing advance of the terminal on a low frequency link based on the low frequency link, and determine, as the starting time of the time domain resource of the uplink reference signal of the terminal on the high frequency link, a position that is the uplink timing advance after a start point, indicated by the system clock, of a timeslot of the low frequency link; or
receive indication information of the starting time of the time domain resource that is sent by a network side.

Optionally, when transmitting the uplink reference signal, the sending unit 1402 is specifically configured to:
generate a radio frame, where the radio frame includes at least one network-oriented measurement timeslot interval, and the network-oriented measurement timeslot interval includes the guard interval and a symbol used for uplink reference signal transmission; and
send the radio frame to transmit the uplink reference signal.

The apparatus 1400 in this embodiment of the present invention may be an independent component, or may be integrated into another component. For example, the apparatus 1400 provided in this embodiment of the present invention may be a terminal in an existing communications network, or may be a component integrated into a terminal.

It should be noted that, for function implementation and an interaction manner of the units of the apparatus 1400 in this embodiment of the present invention, further refer to descriptions in a related method embodiment. Details are not described herein again.

In addition, each foregoing "unit" may be implemented by using an application-specific integrated circuit (ASIC), a processor and a memory that execute one or more software or firmware programs, an integrated logic circuit, and/or another device that can provide the foregoing functions.

Based on a same concept, as shown in FIG. 15, FIG. 15 is a schematic structural diagram of a terminal device 1500 according to an embodiment of the present invention. The terminal device 1500 may be configured to perform an execution process of the terminal in the foregoing method embodiments. The terminal device 1500 may be a wireless terminal. The wireless terminal may be a device that provides voice and/or data connectivity for a user, a handheld device with a wireless connection function, or another processing device connected to a wireless modem. The wireless terminal may communicate with one or more core networks by using a radio access network (RAN). The wireless terminal may be a mobile terminal, such as a mobile phone (or referred to as a "cellular" phone) or a computer with a mobile terminal. For example, the wireless terminal may be a portable, pocket-sized, handheld, or a computer built-in mobile apparatus, or an in-vehicle mobile apparatus, which exchanges voice and/or data with the radio access network. For example, the wireless terminal may be a device such as a personal communications service (PCS) phone, a cordless telephone set, a Session Initiation Protocol (SIP) phone, a wireless local loop (WLL) station, or a personal digital assistant (PDA). The wireless terminal may also be referred to as a subscriber unit, a subscriber station, a mobile station, a mobile station, a remote station, an access point (AP), a remote terminal, an access terminal, a user terminal, a user agent, a user device, or user equipment. The present invention imposes no limitation thereto. For example, the terminal further includes a wired-access terminal with a multi-carrier feature.

Referring to FIG. 15, the terminal device 1500 includes a processor 1501, a memory 1502, and a transceiver 1503.

The processor 1501, the memory 1502, and the transceiver 1503 are connected to each other by using a bus 1504.

The transceiver 1503 may implement a function by using a receiver and a transmitter, and the transceiver 1503 may be a wired transceiver, a wireless transceiver, or a combination thereof.

The wired transceiver may be, for example, an Ethernet interface. The Ethernet interface may be an optical interface, an electrical interface, or a combination thereof. The wireless transceiver may be, for example, a wireless local area network transceiver, a cellular network transceiver, or a combination thereof.

The processor 1501 is configured to invoke a program stored in the memory 1502 to perform the following steps: determining a starting time of a time domain resource of an uplink reference signal of the terminal device on a high frequency link, where there is a guard interval at at least one end of the uplink reference signal; and after the terminal device arrives at the starting time of the time domain resource, switching transmit beams in different time slices in M time slices to transmit the uplink reference signal, where the uplink reference signal includes uplink reference signals transmitted in the M different time slices, and M is a positive integer greater than 1.

The processor 1501 may be a central processing unit (CPU), a general-purpose processor, a digital signal processor (DSP), an application-specific integrated circuit (ASIC), a field programmable gate array (FPGA) or another programmable logic device, a transistor logic device, a hardware component, or any combination thereof. The processor may implement or execute various example logical blocks, modules, and circuits described with reference to content of the terminal disclosed in the present invention. The processor may also be a combination for implementing computing functions, for example, a combination of one or more microprocessors and a combination of a DSP and a microprocessor.

The memory 1502 may include a volatile memory such as a RAM; or the memory 1502 may include a nonvolatile memory such as a ROM, a flash memory, an HDD, or an SSD; or the memory 1502 may include a combination of the foregoing memories. Optionally, the memory 1502 stores voice indication information corresponding to a network frequency channel number. The memory 1502 may be configured to store a message, data, and a storage instruction that are received by the transceiver 1503.

The processor 1501 invokes the instruction stored in the memory 1502 to perform method steps in the method embodiments of the present invention, so as to implement the technical solutions in the method embodiments of the present invention.

In FIG. 15, the bus 1504 may include any quantity of interconnected buses and bridges, and specifically interconnects various circuits of one or more processors represented by the processor 1501 and a memory represented by the memory 1502. The bus 1504 may be a peripheral component interconnect (PCI) bus, an extended industry standard architecture (EISA) bus, or the like. The bus may be classified into an address bus, a data bus, a control bus, and the like. For ease of representation, the bus is represented by using a thick line in FIG. 15. However, it does not indicate that there is only one bus or only one type of bus. The bus 1504 may further interconnect various other circuits such as a peripheral device, a voltage regulator, and a power management circuit. These are all well known in the art, and therefore are not further described in this specification.

For a problem-resolving implementation and beneficial effects of the terminal device, refer to the implementations and the beneficial effects of the method embodiments of the present invention.

Therefore, for implementation of the terminal device, refer to the implementation of the method. Repeated parts are not described.

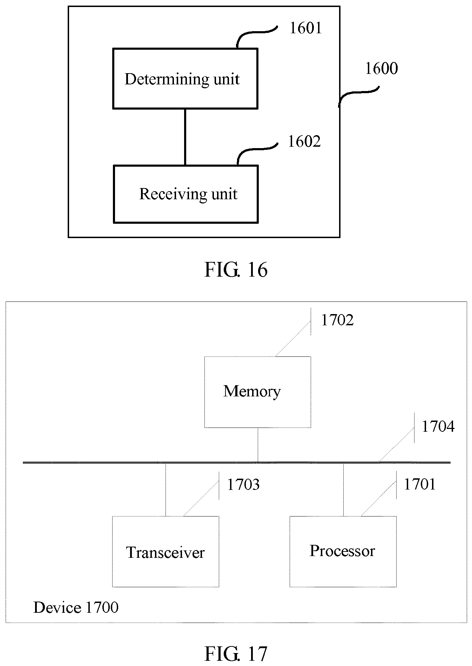

Based on the foregoing embodiments, as shown in FIG. 16, FIG. 16 is a schematic structural diagram of an uplink reference signal transmission apparatus 1600 according to an embodiment of the present invention. The apparatus 1600 is applied to a high frequency micro base station in a HetNet scenario in which a high frequency base station is a micro base station and a low frequency base station is a macro base station or a high frequency base station in a networking scenario of only high frequency base stations, and may be configured to perform an execution process of the high frequency micro base station or the high frequency base station in the foregoing method embodiments. The apparatus 1600 includes a determining unit 1601 and a sending unit 1602.

The determining unit 1601 is configured to determine N time slices that are used to receive an uplink reference signal transmitted by a terminal in a single time slice of the terminal, where N is a positive integer greater than 1.

The receiving unit 1602 is configured to switch receive beams in different time slices in the N time slices to receive the uplink reference signal transmitted by the terminal in the single time slice of the terminal, where there is a guard interval at at least one end of the uplink reference signal.

Optionally, the receiving unit 1602 is further configured to:
after traversing all receive beams in the single time slice of the terminal, continue to switch a receive beam in a switching sequence of the receive beams to receive the reference signal transmitted by the terminal in the single time slice of the terminal.

The apparatus 1600 in this embodiment of the present invention may be an independent component, or may be integrated into another component. For example, the apparatus 1600 provided in this embodiment of the present invention may be a base station in an existing communications network, or may be a component integrated into a base station.

It should be noted that, for function implementation and an interaction manner of the units of the apparatus 1600 in this embodiment of the present invention, further refer to descriptions in a related method embodiment. Details are not described herein again.

In addition, each foregoing "unit" may be implemented by using an application-specific integrated circuit (ASIC), a processor and a memory that execute one or more software or firmware programs, an integrated logic circuit, and/or another device that can provide the foregoing functions.

As shown in FIG. 17, FIG. 17 is a schematic structural diagram of a network side device 1700 according to an embodiment of the present invention. The device 1700 may be configured to perform an execution process of the high frequency micro base station or the high frequency base station in the foregoing method embodiments. The device 1700 may include a base station, or a radio resource management device configured to control a base station.

Referring to FIG. 17, the device 1700 includes a processor 1701, a memory 1702, and a transceiver 1703.

The processor 1701, the memory 1702, and the transceiver 1703 are connected to each other by using a bus 1704.

The transceiver 1703 may implement a function by using a receiver and a transmitter, and the transceiver 1703 may be a wired transceiver, a wireless transceiver, or a combination thereof. The wired transceiver may be, for example, an Ethernet interface. The Ethernet interface may be an optical interface, an electrical interface, or a combination thereof. The wireless transceiver may be, for example, a wireless local area network transceiver, a cellular network transceiver, or a combination thereof.

The processor 1701 may be a CPU, a general purpose processor, a DSP, an ASIC, an FPGA or another programmable logic device, a transistor logic device, a hardware component, or any combination thereof. The memory 1702 may include a volatile memory such as a RAM; or the memory 1702 may include a nonvolatile memory such as a ROM, a flash memory, an HDD, or an SSD; or the memory 1702 may include a combination of the foregoing memories.

The memory 1702 may be configured to store a message received by the transceiver 1703 and a program to be executed by the processor 1701.

The processor 1701 is configured to invoke the program stored in the memory 1702 to perform the following steps: determining N time slices that are used to receive an uplink reference signal transmitted by the terminal in a single time slice of the terminal, where N is a positive integer greater than 1; and switching receive beams in different time slices in the N time slices to receive, by using the transceiver 1703, the uplink reference signal transmitted by the terminal in the single time slice of the terminal, where there is a guard interval at at least one end of the uplink reference signal.

In FIG. 17, the bus 1704 may include any quantity of interconnected buses and bridges, and specifically interconnects various circuits of one or more processors represented by the processor 1701 and a memory represented by the memory 1702. The bus 1704 may be a PCI bus, an EISA bus, or the like. The bus may be classified into an address bus, a data bus, a control bus, and the like. For ease of representation, the bus is represented by using a thick line in FIG. 17. However, it does not indicate that there is only one bus or only one type of bus. The bus 1704 may further interconnect various other circuits such as a peripheral device, a voltage regulator, and a power management circuit. These are all well known in the art, and therefore are not further described in this specification.

In conclusion, in the embodiments of the present invention, in a HetNet scenario in which a high frequency base station is a micro base station, and a low frequency base station is a macro base station, a terminal determines a starting time of a time domain resource of an uplink reference signal of the terminal on a high frequency base station, where there is a guard interval at at least one end of the uplink reference signal; and when the starting time of the time domain resource is reached, switches transmit beams in different time slices in M time slices to transmit the uplink reference signal, where the uplink reference signal includes uplink reference signals transmitted in the M different time slices, and M is a positive integer greater than 1. A high frequency base station determines N time slices that are used to receive an uplink reference signal transmitted by the terminal in a single time slice of the terminal; and switches receive beams in different time slices in the N time slices to receive the uplink reference signal of the terminal. In this way, uplink reference signals can be transmitted accurately in different networking scenarios, and a beam detection missing problem caused when an uplink reference
signal sent by using a transmit beam cannot be completely received is overcome.

A person skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the device, and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams. These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some embodiments of the present invention have been described, a person skilled in the art can make changes and modifications to these embodiments once they learn the basic inventive concept. The present invention is intended to cover these modifications and variations provided that they fall within the scope of protection defined by the following claims.

## Claims

1. An uplink reference signal transmission method, comprising:
obtaining (31), by a terminal, a starting time of a time domain resource of an uplink reference signal of the terminal on a high frequency link, wherein there is a guard interval at at least one end of the uplink reference signal; and
when the starting time of the time domain resource is reached, switching (32), by the terminal, transmit beams in different time slices in M time slices to transmit the uplink reference signal, wherein the uplink reference signal comprises uplink reference signals transmitted in the M different time slices, and M is a positive integer greater than 1,
wherein the determining, by a terminal, a starting time of a time domain resource of an uplink reference signal of the terminal on a high frequency link comprises:
obtaining, by the terminal, a system clock of a low frequency base station based on a low frequency link, and determining a start point position, indicated by the system clock, of a timeslot of the low frequency link as the starting time of the time domain resource of the uplink reference signal of the terminal on the high frequency link; or
obtaining, by the terminal, a system clock of a low frequency base station and an uplink timing advance of the terminal on a low frequency link based on the low frequency link, and determining, as the starting time of the time domain resource of the uplink reference signal of the terminal on the high frequency link, a position that is the uplink timing advance after a start point, indicated by the system clock, of a timeslot of the low frequency link; or
receiving, by the terminal, indication information of the starting time of the time domain resource that is sent by a network side.

2. The method according to claim 1, wherein the guard interval is duration in which the terminal does not transmit a signal.

3. The method according to claim 1, wherein the uplink reference signal comprises a synchronization reference signal and/or an uplink measurement reference signal.

4. The method according to claim 3, wherein the uplink measurement reference signal comprises a sounding reference signal.

5. The method according to claim 1, wherein a length of the guard interval is not less than a half of an uplink timing advance from the terminal to any high frequency base station.

6. The method according to any one of claims 1 to 5, wherein the transmitting, by the terminal, the uplink reference signal comprises:
generating a radio frame, wherein the radio frame comprises at least one network-oriented measurement timeslot interval, and the network-oriented measurement timeslot interval comprises the guard interval and a symbol used for uplink reference signal transmission; and
sending the radio frame to transmit the uplink reference signal.

7. An uplink reference signal transmission apparatus for a terminal, comprising:
a processor, configured to determine a starting time of a time domain resource of an uplink reference signal of a terminal on a high frequency link, wherein there is a guard interval at at least one end of the uplink reference signal; and
a transmitter, configured to: when the starting time of the time domain resource is reached, switch transmit beams in different time slices in M time slices to transmit the uplink reference signal, wherein the uplink reference signal comprises uplink reference signals transmitted in the M different time slices, and M is a positive integer greater than 1,
wherein when determining the starting time of a time domain resource of the uplink reference signal of the terminal on the high frequency link, the processor is specifically configured to at least one of:
the determining starting time of a time domain resource of an uplink reference signal of a terminal on a high frequency link comprises: obtaining a system clock of a low frequency base station based on a low frequency link, and determining a start point position, indicated by the system clock, of a timeslot of the low frequency link as the starting time of the time domain resource of the uplink reference signal of the terminal on the high frequency link;
obtain a system clock of a low frequency base station and an uplink timing advance of the terminal on a low frequency link based on the low frequency link, and determine, as the starting time of the time domain resource of the uplink reference signal of the terminal on the high frequency link, a position that is the uplink timing advance after a start point, indicated by the system clock, of a timeslot of the low frequency link; or
receive indication information of the starting time of the time domain resource that is sent by a network side.

8. The apparatus according to claim 7, wherein a length of the guard interval is not less than a half of an uplink timing advance from the terminal to any high frequency base station.

9. The apparatus according to any one of claims 7 to 8, wherein when transmitting the uplink reference signal, the transmitter is specifically configured to:
generate a radio frame, wherein the radio frame comprises at least one network-oriented measurement timeslot interval, and the network-oriented measurement timeslot interval comprises the guard interval and a symbol used for uplink reference signal transmission; and
send the radio frame to transmit the uplink reference signal.

## Patentansprüche

1. Uplink-Referenzsignalübertragungsverfahren, das Folgendes umfasst:
Erhalten (31), durch ein Endgerät, einer Startzeit einer Zeitbereichsressource eines Uplink-Referenzsignals des Endgeräts auf einer Hochfrequenzverbindung, wobei ein Schutzintervall an wenigstens einem Ende des Uplink-Referenzsignals vorhanden ist; und
wenn die Startzeit der Zeitbereichsressource erreicht ist, Wechseln (32), durch das Endgerät, von Übertragungsstrahlen in verschiedenen Zeitscheiben in M Zeitscheiben, um das Uplink-Referenzsignal zu übertragen, wobei das Uplink-Referenzsignal Uplink-Referenzsignale umfasst, die in den M verschiedenen Zeitscheiben übertragen werden, und M eine positive ganze Zahl über 1 ist, wobei das Bestimmen, durch ein Endgerät, einer Startzeit einer Zeitbereichsressource eines Uplink-Referenzsignals des Endgeräts auf einer Hochfrequenzverbindung Folgendes umfasst:
Erhalten, durch das Endgerät, eines Systemtakts einer Niederfrequenzbasisstation basierend auf einer Niederfrequenzverbindung und Bestimmen einer Startpunktposition, die durch den Systemtakt angezeigt wird, eines Zeitschlitzes des Niederfrequenzverbindung als die Startzeit der Zeitbereichsressource des Uplink-Referenzsignals des Endgeräts auf der Hochfrequenzverbindung; oder
Erhalten, durch das Endgerät, eines Systemtakts einer Niederfrequenzbasisstation und eines Uplink-Zeitsteuerungsvorlaufs des Endgeräts auf einer Niederfrequenzverbindung basierend auf der Niederfrequenzverbindung und Bestimmen, als die Startzeit der Zeitbereichsressource des Uplink-Referenzsignals des Endgeräts auf der Hochfrequenzverbindung, einer Position, die der Uplink-Zeitsteuerungsvorlauf nach einem Startpunkt, der durch den Systemtakt angezeigt wird, eines Zeitschlitzes der Niederfrequenzverbindung ist; oder
Empfangen, durch das Endgerät, von Anzeigeinformationen der Startzeit der Zeitbereichsressource, die durch eine Netzseite gesendet werden.

2. Verfahren nach Anspruch 1, wobei das Schutzintervall eine Dauer ist, in der das Endgerät ein Signal nicht überträgt.

3. Verfahren nach Anspruch 1, wobei das Uplink-Referenzsignal ein Synchronisationsreferenzsignal und/oder ein Uplink-Messreferenzsignal umfasst.

4. Verfahren nach Anspruch 3, wobei das Uplink-Messreferenzsignal ein Sondierungsreferenzsignal umfasst.

5. Verfahren nach Anspruch 1, wobei eine Länge des Schutzintervalls nicht weniger als eine Hälfte eines Uplink-Zeitsteuerungsvorlaufs von dem Endgerät zu einer beliebigen Hochfrequenzbasisstation beträgt.

6. Verfahren nach einem der Ansprüche 1 bis 5, wobei das Übertragen, durch das Endgerät, des Uplink-Referenzsignals Folgendes umfasst:
Erzeugen eines Funkrahmens, wobei der Funkrahmen wenigstens ein netzorientiertes Messzeitschlitzintervall umfasst und das netzorientierte Messzeitschlitzintervall das Schutzintervall und ein Symbol umfasst, das für die Uplink-Referenzsignalübertragung verwendet wird; und
Senden des Funkrahmens, um das Uplink-Referenzsignal zu übertragen.

7. Uplink-Referenzsignalübertragungseinrichtung für ein Endgerät, die Folgendes umfasst:
einen Prozessor, der konfiguriert ist, um eine Startzeit einer Zeitbereichsressource eines Uplink-Referenzsignals eines Endgeräts auf einer Hochfrequenzverbindung zu bestimmen, wobei ein Schutzintervall an wenigstens einem Ende des Uplink-Referenzsignals vorhanden ist; und
eine Übertragungsvorrichtung, die für Folgendes konfiguriert ist:
wenn die Startzeit der Zeitbereichsressource erreicht ist, Wechseln der Übertragungsstrahlen in verschiedenen Zeitscheiben in M Zeitscheiben, um das Uplink-Referenzsignal zu übertragen, wobei das Uplink-Referenzsignal Uplink-Referenzsignale umfasst, die in den M verschiedenen Zeitscheiben übertragen werden, und M eine positive ganze Zahl über 1 ist, wobei, wenn die Startzeit einer Zeitbereichsressource des Uplink-Referenzsignals des Endgeräts auf der Hochfrequenzverbindung bestimmt wird, der Prozessor speziell konfiguriert ist, um wenigstens eines von Folgendem zu tun:
wobei das Bestimmen der Startzeit einer Zeitbereichsressource eines Uplink-Referenzsignals eines Endgeräts auf einer Hochfrequenzverbindung Folgendes umfasst:
Erhalten eines Systemtakts einer Niederfrequenzbasisstation basierend auf einer Niederfrequenzverbindung und Bestimmen einer Startpunktposition, die durch den Systemtakt angezeigt wird, eines Zeitschlitzes der Niederfrequenzverbindung als die Startzeit der Zeitbereichsressource des Uplink-Referenzsignals des Endgeräts auf der Hochfrequenzverbindung;
Erhalten eines Systemtakts einer Niederfrequenzbasisstation und eines Uplink-Zeitsteuerungsvorlaufs des Endgeräts auf einer Niederfrequenzverbindung basierend auf der Niederfrequenzverbindung und Bestimmen als die Startzeit der Zeitbereichsressource des Uplink-Referenzsignals des Endgeräts auf der Hochfrequenzverbindung einer Position, die der Uplink-Zeitsteuerungsvorlauf nach einem Startpunkt, der durch den Systemtakt angezeigt wird, eines Zeitschlitzes der Niederfrequenzverbindung ist; oder
Empfangen von Anzeigeinformationen der Startzeit der Zeitbereichsressource, die durch eine Netzseite gesendet werden.

8. Einrichtung nach Anspruch 7, wobei eine Länge des Schutzintervalls nicht weniger als eine Hälfte eines Uplink-Zeitsteuerungsvorlaufs von dem Endgerät zu einer beliebigen Hochfrequenzbasisstation beträgt.

9. Einrichtung nach einem der Ansprüche 7 bis 8, wobei, wenn das Uplink-Referenzsignal übertragen wird, die Übertragungsvorrichtung speziell für Folgendes konfiguriert ist:
Erzeugen eines Funkrahmens, wobei der Funkrahmen wenigstens ein netzorientiertes Messzeitschlitzintervall umfasst und das netzorientierte Messzeitschlitzintervall das Schutzintervall und ein Symbol umfasst, das für die Uplink-Referenzsignalübertragung verwendet wird; und
Senden des Funkrahmens, um das Uplink-Referenzsignal zu übertragen.

## Revendications

1. Procédé d'émission de signal de référence de liaison montante, comprenant :
l'obtention (31), par un terminal, d'une heure de début d'une ressource de domaine temporel d'un signal de référence de liaison montante du terminal sur une liaison haute fréquence, dans lequel il existe un intervalle de garde à au moins une extrémité du signal de référence de liaison montante ; et
lorsque l'heure de début de la ressource de domaine temporel est atteinte, la commutation (32), par le terminal, de faisceaux d'émission dans différentes tranches de temps en M tranches de temps pour émettre le signal de référence de liaison montante, le signal de référence de liaison montante comprenant des signaux de référence de liaison montante émis dans les M tranches de temps différentes, et M représentant un entier positif supérieur à 1, dans lequel la détermination, par un terminal, d'une heure de début d'une ressource de domaine temporel d'un signal de référence de liaison montante du terminal sur une liaison haute fréquence comprend :
l'obtention, par le terminal, d'une horloge système d'une station de base basse fréquence reposant sur une liaison basse fréquence, et la détermination d'une position de point de départ, indiquée par l'horloge système, d'un créneau temporel de la liaison basse fréquence comme heure de début de la ressource de domaine temporel du signal de référence de liaison montante du terminal sur la liaison haute fréquence ; ou
l'obtention, par le terminal, d'une horloge système d'une station de base basse fréquence et d'une avance temporelle de liaison montante du terminal sur une liaison basse fréquence reposant sur la liaison basse fréquence, et la détermination, comme heure de début de la ressource de domaine temporel du signal de référence de liaison montante du terminal sur la liaison haute fréquence, d'une position qui est l'avance temporelle de la liaison montante après un point de départ, indiqué par l'horloge système, d'un créneau temporel de la liaison basse fréquence ; ou
la réception, par le terminal, des informations d'indication de l'heure de début de la ressource de domaine temporel qui est envoyée par un côté réseau.

2. Procédé selon la revendication 1, dans lequel l'intervalle de garde est la durée pendant laquelle le terminal n'émet pas de signal.

3. Procédé selon la revendication 1, dans lequel le signal de référence de liaison montante comprend un signal de référence de synchronisation et/ou un signal de référence de mesure de liaison montante.

4. Procédé selon la revendication 3, dans lequel le signal de référence de mesure de liaison montante comprend un signal de référence de sondage.

5. Procédé selon la revendication 1, dans lequel une longueur de l'intervalle de garde n'est pas inférieure à la moitié d'une avance temporelle de liaison montante depuis le terminal vers n'importe quelle station de base haute fréquence.

6. Procédé selon l'une quelconque des revendications 1 à 5, dans lequel l'émission, par le terminal, du signal de référence de liaison montante comprend :
la génération d'une trame radio, la trame radio comprenant au moins un intervalle de créneau temporel de mesure orienté réseau, et l'intervalle de créneau temporel de mesure orienté réseau comprend l'intervalle de garde et un symbole utilisé pour l'émission de signal de référence de liaison montante ; et
l'envoi de la trame radio pour émettre le signal de référence de liaison montante.

7. Appareil d'émission de signal de référence de liaison montante pour un terminal, comprenant :
un processeur, configuré pour déterminer une heure de début d'une ressource de domaine temporel d'un signal de référence de liaison montante d'un terminal sur une liaison haute fréquence, dans lequel il existe un intervalle de garde à au moins une extrémité du signal de référence de liaison montante ; et
un émetteur, configuré pour :
lorsque l'heure de début de la ressource de domaine temporel est atteinte, commuter les faisceaux d'émission dans différentes tranches de temps dans M tranches de temps pour émettre le signal de référence de liaison montante, le signal de référence de liaison montante comprenant des signaux de référence de liaison montante émis dans les M tranches de temps différentes, et M étant un entier positif supérieur à 1, dans lequel, lors de la détermination de l'heure de début d'une ressource de domaine temporel du signal de référence de liaison montante du terminal sur la liaison haute fréquence, le processeur est spécifiquement configuré pour au moins l'un parmi :
l'heure de début de détermination d'une ressource de domaine temporel d'un signal de référence de liaison montante d'un terminal sur une liaison haute fréquence comprenant :
l'obtention d'une horloge système d'une station de base basse fréquence sur la base d'une liaison basse fréquence, et la détermination d'une position de point de départ, indiquée par l'horloge système, d'un créneau temporel de la liaison basse fréquence comme heure de début de la ressource de domaine temporel du signal de référence de liaison montante du terminal sur la liaison haute fréquence ;
obtenir une horloge système d'une station de base basse fréquence et une avance temporelle de liaison montante du terminal sur une liaison basse fréquence reposant sur la liaison basse fréquence, et déterminer, comme heure de début de la ressource de domaine temporel du signal de référence de liaison montante du terminal sur la liaison haute fréquence, une position qui est l'avance temporelle de la liaison montante après un point de départ, indiqué par l'horloge système, d'un créneau temporel de la liaison basse fréquence ;
recevoir des informations d'indication de l'heure de début de la ressource de domaine temporel qui est envoyée par un côté réseau.

8. Appareil selon la revendication 7, dans lequel une longueur de l'intervalle de garde n'est pas inférieure à la moitié d'une avance temporelle de liaison montante depuis le terminal vers n'importe quelle station de base haute fréquence.

9. Appareil selon l'une quelconque des revendications 7 à 8, dans lequel lors de l'émission du signal de référence de liaison montante, le transmetteur est spécifiquement configuré pour :
générer une trame radio, la trame radio comprenant au moins un intervalle de créneau temporel de mesure orienté réseau, et l'intervalle de créneau temporel de mesure orienté réseau comprenant l'intervalle de garde et un symbole utilisé pour l'émission de signal de référence de liaison montante ; et
envoyer la trame radio pour émettre le signal de référence de liaison montante.
